# EUROPÄISCHE PATENTANMELDUNG

(11) **EP 4 297 255 A1**
(43) Veröffentlichungstag der Anmeldung: **27.12.2023**
(21) Anmeldenummer: 22179905.9
(22) Anmeldetag: 20.06.2022
(51) Int. Cl.: H02K 21/44

(54) **BÜRSTENLOSES ANTRIEBSSYSTEM FÜR EINE DREHANODENANORDNUNG**

(71) Anmelder: Siemens Healthcare GmbH, 91052 Erlangen (DE)
(72) Erfinder: Weidinger, Thomas, 91052 Erlangen (DE)
(74) Vertreter: Siemens Healthineers Patent Attorneys

(57) **Zusammenfassung**

Die Erfindung betrifft ein bürstenloses Antriebssystem für eine Drehanodenanordnung, welches
- einen Stator zur Erzeugung eines magnetischen Flusses und
- einen Reluktanzrotor aufweist,
wobei der Stator ein zylindrisches Statorjoch, einen ringförmigen Permanentmagneten und eine Spuleneinheit aufweist, wobei der Reluktanzrotor ein zylindrisches Rotorjoch aus einem weichmagnetischen Material aufweist, frei von magnetischen Quellen ist und mittels des magnetischen Flusses um eine Drehachse antreibbar ist,
dadurch gekennzeichnet,
dass der Permanentmagnet und die Spuleneinheit axial entlang der Drehachse beabstandet sind und dass das Statorjoch, der Permanentmagnet, das Rotorjoch und die Spuleneinheit einen derart ausgestalteten magnetischen Kreis zur Führung des magnetischen Flusses bilden, dass zwischen dem Permanentmagneten und der Spuleneinheit eine axiale Richtung des magnetischen Kreises im Statorjoch und eine axiale Richtung des magnetischen Kreises im Rotorjoch entgegengesetzte Vorzeichen aufweisen.

## Beschreibung

Die Erfindung betrifft ein bürstenloses Antriebssystem für eine Drehanodenanordnung, die Drehanodenanordnung und eine Röntgenröhre.

Herkömmliche Röntgenröhren können grundsätzlich in zwei verschiedene Kategorien bezüglich der Beweglichkeit der Anode unterteilt werden: in Stehbrennfleck-Röntgenröhren und Drehbrennfleck-Röntgenröhren. Eine herkömmliche Stehanoden-Röntgenröhre weist typischerweise eine Anode auf, welche einen ortsfesten Brennfleck aufweist, und kann daher als Stehbrennfleck-Röntgenröhre bezeichnet werden. Andere Röntgenröhren mit einer Anode, bei welcher der Brennfleck Teil einer kreisförmigen Brennbahn ist, wobei letztere durch ein Verdrehen der Anode relativ zum Elektronenemitter entsteht, können insbesondere Drehbrennfleck- oder Brennbahn-Röntgenröhren bezeichnet werden.

Die Drehbrennfleck-Röntgenröhren können weiterhin in zwei Unterkategorien unterteilt werden, wobei in der einen Röntgenröhre lediglich die Anode verdrehbar relativ zum Elektronenemitter sowie zum Röntgenröhrengehäuse gelagert und somit insbesondere als Drehanoden-Röntgenröhren benennbar ist und wobei in einer anderen Röntgenröhre die Anode drehfest relativ zum Elektronenemitter sowie zum Röntgenröhrengehäuse angeordnet und somit insbesondere als Drehkolben-Röntgenröhre benennbar ist.

Das Antreiben der Drehanode in einer herkömmlichen Drehanoden-Röntgenröhre erfolgt beispielsweise mittels eines Asynchronmotors, der von einem Wechselrichter gespeist wird, siehe beispielswiese die DE 197 52 114 A1. Ein derartiger Asynchronmotor ist beispielsweise ein Jochmotor und weist insbesondere einen Drehstromstator, beispielsweise mit einer klassischen verteilten Wicklung, und einen Rotor aus magnetisch leitendem Material (typischerweise Stahl) und elektrisch leitendem Material (typischerweise Kupfer) auf. Ein solcher Asynchronmotor wird über einen zwei- oder dreiphasigen Wechselrichter angetrieben und/oder direkt mit einem (insbesondere einphasigen) Netzanschluss verbunden. Eine Drehzahlmessung ist üblicherweise aufwändig und beispielswiese mittels einer Remanenzmessung möglich.

Alternativ dazu kann die Drehanode mittels eines Synchronmotors angetrieben werden, wie beispielsweise in den folgenden Druckschriften offenbart ist: aus der DE 10 2011 077 746 A1 ist eine Drehanode für eine Röntgenröhre bekannt, wobei die Drehanode einen Rotor zum Antrieb der Drehanode umfasst, wobei mindestens ein Dauermagnet im Rotor derart angeordnet ist, dass durch ein Magnetfeld einer Statorwicklung ein Drehmoment auf den Dauermagneten ausgeübt wird. DE 10 2012 212 133 B3 gibt eine Drehanodenanordnung mit einer Drehanode, einem Rotor zum Antrieb der Drehanode und einem Stator, der ein Drehmoment auf den Rotor ausübt, an, wobei der Stator mindestens eine Spule zur Erzeugung eines ersten Magnetfelds und mindestens einen Permanentmagneten zur Erzeugung eines zweiten Magnetfelds umfasst. Die Spulen und die Permanentmagnete sind entlang des Umfangs des Statorgehäuses angeordnet, wobei jeweils ein Permanentmagnet innerhalb jeweils einer Spule angeordnet ist.

Der Erfindung liegt die Aufgabe zu Grunde, ein bürstenloses Antriebssystem für eine Drehanodenanordnung, die Drehanodenanordnung und eine Röntgenröhre mit einem kompakten Aufbau, einer hohen Leistungsdichte und/oder einem hohen Wirkungsgrad anzugeben.

Die Aufgabe wird durch die Merkmale der unabhängigen Ansprüche gelöst. Vorteilhafte Ausgestaltungen sind in den Unteransprüchen beschrieben.

Das erfindungsgemäße bürstenlose Antriebssystem für eine Drehanodenanordnung weist
- einen Stator zur Erzeugung eines magnetischen Flusses und
- einen Reluktanzrotor auf,

wobei der Stator ein zylindrisches Statorjoch, einen ringförmigen Permanentmagneten und eine Spuleneinheit aufweist, wobei der Reluktanzrotor ein zylindrisches Rotorjoch aus einem weichmagnetischen Material aufweist, frei von magnetischen Quellen ist, mit einer Drehanode der Drehanodenanordnung verbindbar ist und mittels des magnetischen Flusses um eine Drehachse antreibbar ist,
dadurch gekennzeichnet,
dass der Permanentmagnet und die Spuleneinheit axial entlang der Drehachse beabstandet sind und dass das Statorjoch, der Permanentmagnet, das Rotorjoch und die Spuleneinheit einen derart ausgestalteten magnetischen Kreis zur Führung des magnetischen Flusses bilden, dass zwischen dem Permanentmagneten und der Spuleneinheit eine axiale Richtung des magnetischen Kreises im Statorjoch und eine axiale Richtung des magnetischen Kreises im Rotorjoch entgegengesetzte Vorzeichen aufweisen.

Eine Ausführungsform sieht vor, dass der Stator einen weiteren ringförmigen Permanentmagneten aufweist, wobei die Spuleneinheit mittig zwischen dem Permanentmagneten und dem weiteren Permanentmagneten angeordnet ist und zum Permanentmagneten sowie zum weiteren Permanentmagneten axial beabstandet ist. In dieser Ausführungsform ist vorteilhafterweise eine Antriebsleistung des Antriebssystems erhöht.

Eine Ausführungsform sieht vor, dass das Rotorjoch zur Aufnahme eines Lagers ausgebildet ist. Diese Ausführungsform ist insbesondere vorteilhaft, weil ein Lager das Rotorjoch in einem definierten Abstand zum Stator hält.

Eine Ausführungsform sieht vor, dass das Rotorjoch zur Aufnahme des Lagers hohl ausgebildet ist. Die Ausführung eines hohlen Rotorjoches bietet insbesondere einen Gewichtsvorteil und einen damit verbundenen Kostenvorteil. Typischerweise ist mit einem geringeren Gewicht ein verringerte Trägheit des Reluktanzrotors verbunden.

Eine Ausführungsform sieht vor, dass das Rotorjoch stirnseitig zur Aufnahme des Lagers ausgebildet ist.

Eine Ausführungsform sieht vor, dass die Spuleneinheit mehrere Spulen, welche insbesondere entlang des Umfangs des Statorjochs um Statorzahnpole des Statorjochs gewickelt sind, aufweist.

Eine Ausführungsform sieht vor, dass die mehreren Spulen der Spuleneinheit konzentriert oder verteilt gewickelt sind.

Eine Ausführungsform sieht vor, dass die mehreren Spulen der Spuleneinheit eine dreisträngige Motorwicklung bilden.

Eine Ausführungsform sieht vor, dass das bürstenlose Antriebssystem eine Regeleinheit zum Bestromen der mehreren Spulen der Spuleneinheit nach Art eines bürstenlosen Gleichstrommotors aufweist.

Eine Ausführungsform sieht vor, dass das bürstenlose Antriebssystem einen Wechselrichter aufweist, welcher der Spuleneinheit vorgeschaltet ist zum Bestromen der mehreren Spulen der Spuleneinheit mit Wechselspannung.

Eine Ausführungsform sieht vor, dass das Rotorjoch seitliche Ausnehmungen in der zylindrischen Mantelfläche zur Ausprägung zumindest eines Rotorpolpaars aufweist.

Eine Ausführungsform sieht vor, dass das Rotorjoch einstückig ausgebildet ist.

Eine Ausführungsform sieht vor, dass der Reluktanzrotor ein Innenläufer ist.

Eine Ausführungsform sieht vor, dass der Permanentmagnet und die Spuleneinheit auf einer Innenseite der Mantelfläche des Statorjochs angeordnet sind.

Eine Ausführungsform sieht vor, dass die mehreren Spulen zumindest zwei, vorzugsweise sechs Drehstromwicklungen bilden.

Ein Vorteil des bürstenlosen Antriebssystems ist, dass der Permanentmagnet zumindest einen Teil des magnetischen Flusses erzeugt und somit die mehreren Spulen bei Bestromung lediglich einen weiteren Teil des magnetischen Flusses erzeugen. Dadurch steigt vorteilhafterweise der Wirkungsgrad an, wobei gleichzeitig geringere Verluste auftreten, als wenn ausschließlich bestromte Spulen den magnetischen Fluss erzeugen.

Das bürstenlose Antriebssystem ist weiterhin vorteilhaft, weil der Reluktanzrotor vergleichbar einfach und/oder kompakt aufgebaut ist. Der Reluktanzrotor kann insbesondere aus einem weichmagnetischen Material bestehen, z.B. aus Stahl oder Edelstahl, was typischerweise mit einem Kostenvorteil einhergeht. Vorzugsweise treten im Reluktanzrotor keine Ummagnetisierungsverluste und/oder Wirbelstromverluste auf.

Durch die vergleichsweise niedrigeren Wirkungsgrade und die vergleichsweise höheren Verluste herkömmlicher Anodenantriebssysteme wird insbesondere ein nutzbarer Anteil der Gesamtleistung teilweise erheblich eingeschränkt. Die Verluste eines solchen herkömmlichen Antriebssystems liegen typischerweise in der Größenordnung der Verluste der Röntgenstrahlerzeugung auf der Anode. Mit dem erfindungsgemäßen bürstenlosen Antriebssystem kann ein höherer Anteil der Gesamtleistung genutzt werden, beispielsweise für den Betrieb der Röntgenröhre bei der Röntgenstrahlerzeugung. Eine Reduktion der Verluste erhöht typischerweise die Performance der Röntgenröhre erheblich.

Ein weiterer Vorteil des bürstenlosen Antriebssystems betrifft die Anordnung des Permanentmagneten am Stator, welcher insbesondere im Betrieb als Teil einer Drehanodenanordnung wesentlich kühler ist als der Reluktanzrotor. Insbesondere wenn die Drehanode mit dem Reluktanzrotor verbunden ist, wird ein Großteil der im Brennfleck aufgenommen Energie als Wärme über den Reluktanzrotor abtransportiert, wobei in einer herkömmlichen Röntgenröhre diese Wärme einen rotorseitig angeordneten Permanentmagneten schädigen kann. Typische Permanentmagnete sind regelmäßig nur bis zu 300°C temperaturbeständig.

Durch die Verwendung von zwei Materialien für den Rotor bei einem herkömmlichen Anodenantrieb, z.B. Kupfer und Stahl, entstehen je nach Ausführung teilweise sehr hohe Fertigungs- und Materialkosten. Ein einfacher Reluktanzrotoraufbau kann daher eine deutliche Kostenreduktion mit sich bringen.

Weiterhin ist vorteilhaft, dass bei dem bürstenlosen Antriebssystem eine Drehzahlregelung integriert ist und somit eine Abschätzung der Drehzahl, wie bei manchen herkömmlichen Antriebssystemen üblich, entfallen kann. Vorzugsweise kann die Drehzahl des Reluktanzrotors z.B. für Diagnosezwecke überwacht werden, um einen Verschleiß oder einen Defekt im bürstenlosen Antriebssystem, insbesondere einen Defekt des Lagers, zu detektieren.

Die erfindungsgemäße Drehanodenanordnung weist
- ein bürstenloses Antriebssystem und
- eine Drehanode auf, wobei die Drehanode mit dem Reluktanzrotor drehfest verbunden ist. Da die Drehanodenanordnung das bürstenlose Antriebssystem aufweist, teilt es die zuvor im Zusammenhang mit dem bürstenlosen Antriebssystem beschriebenen Vorteile und Ausführungsformen.

Die erfindungsgemäße Röntgenröhre weist
- eine Drehanodenanordnung,
- einen Elektronenemitter und
- ein evakuiertes Röntgenröhrengehäuse auf, wobei der Reluktanzrotor sowie der Elektronenemitter innerhalb des Röntgenröhrengehäuses und der Stator außerhalb der Röntgenröhrengehäuses angeordnet sind. Da die Röntgenröhre die Drehanodenanordnung mit dem bürstenlosen Antriebssystem aufweist, teilt sie die zuvor im Zusammenhang mit dem bürstenlosen Antriebssystem beschriebenen Vorteile und Ausführungsformen.

Die statorseitige Anordnung des Permanentmagneten ist weiterhin vorteilhaft, weil somit ein Ausheizen des evakuierten Röntgenröhrengehäuses zur Bereitstellung des Hochvakuums mit bis zu 600°C erfolgen kann, ohne einen rotorseitigen Permanentmagneten des Antriebssystems zu beeinflussen, insbesondere zu beschädigen.

Im Folgenden wird die Erfindung anhand der in den Figuren dargestellten Ausführungsbeispiele näher beschrieben und erläutert. Grundsätzlich werden in der folgenden Figurenbeschreibung im Wesentlichen gleich bleibende Strukturen und Einheiten mit demselben Bezugszeichen wie beim erstmaligen Auftreten der jeweiligen Struktur oder Einheit benannt.

Es zeigen:
Fig. 1 ein erfindungsgemäßes bürstenloses Antriebssystem,
Fig. 2 ein Rotorjoch,
Fig. 3 das bürstenlose Antriebssystem in einem ersten Ausführungsbeispiel,
Fig. 4 das erste Ausführungsbeispiel des bürstenlosen Antriebssystems in einer weiteren Ansicht,
Fig. 5 eine Regelung des bürstenlosen Antriebssystems,
Fig. 6 eine erfindungsgemäße Drehanodenanordnung und
Fig. 7 eine erfindungsmäße Röntgenröhre.

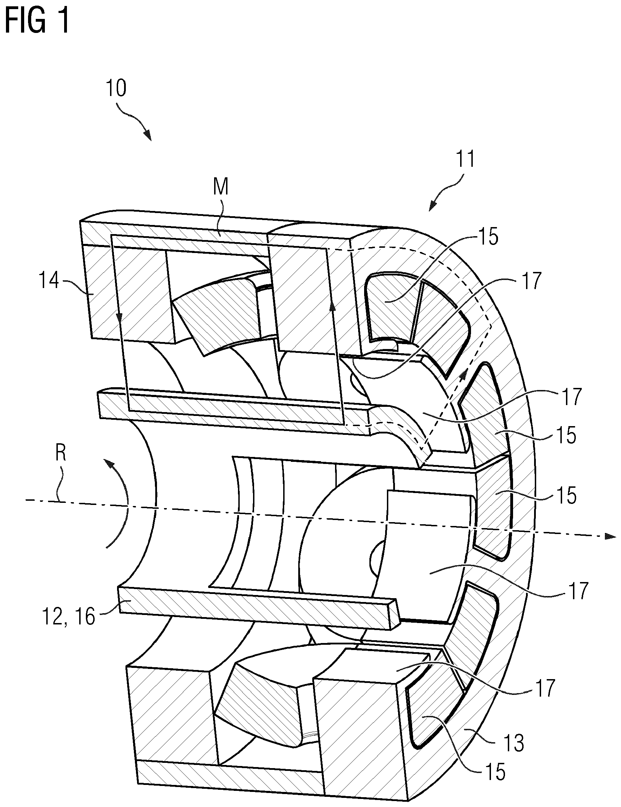

Fig. 1 zeigt eine Schnittdarstellung eines bürstenlosen Antriebssystems 10 in einer perspektivischen Ansicht. Die Schnittkanten der Schnittdarstellung sind einerseits entlang der Drehachse R des Antriebssystems 10 und andererseits senkrecht zur Drehachse R an der Spuleneinheit 15.

Das bürstenlose Antriebssystem 10 ist für eine Drehanodenanordnung ausgebildet. Das bürstenlose Antriebssystem 10 kann insbesondere zum Antreiben einer Drehanodenanordnung verwendet werden. Das bürstenlose Antriebssystem 10 ist insbesondere ein geberloses Antriebssystem.

Das bürstenlose Antriebssystem 10 für eine Drehanodenanordnung weist einen Stator 11 zur Erzeugung eines magnetischen Flusses und einen Reluktanzrotor 12 auf. Der Stator 11 und der Reluktanzrotor 12 bilden insbesondere eine permanenterregte Synchronmaschine bzw. einen permanenterregten Synchronmotor.

Der Stator 11 weist ein zylindrisches Statorjoch 13, einen ringförmigen Permanentmagneten 14 und eine Spuleneinheit 15 auf. Eine äußere Form des Stators 11 ist insbesondere zylindrisch. Der ringförmige Permanentmagnet 14 weist insbesondere eine zentrale Ausnehmung auf, um beispielsweise das Statorjoch 13 und/oder den Reluktanzrotor 12 umschließen zu können.

Die Spuleneinheit 15 weist in diesem Ausführungsbeispiel mehrere entlang des Umfangs des Statorjochs 13 um Statorzahnpole 17 des Statorjochs 13 gewickelte Spulen auf. Die mehreren Spulen sind insbesondere an einem einzelnen Achsenabschnitt der Drehachse R ringförmig um die Drehachse R angeordnet. Die mehreren Spulen sind in diesem Ausführungsbeispiel konzentriert gewickelt. Alternativ können die mehreren Spulen verteilt gewickelt sein. Die mehreren Spulen bilden insbesondere eine dreisträngige Motorwicklung und/oder Drehstromwicklungen. Die mehreren Spulen sind typischerweise entlang der Mantelfläche des zylindrischen Statorjochs 13 angeordnet. Die Statorzahnpole 17 sind regelmäßig entlang des Umfangs oder der Mantelfläche des Statorjochs 13 angeordnet.

Der Permanentmagnet 14 und die Spuleneinheit 15 sind axial entlang der Drehachse R beabstandet. Der Permanentmagnet 14 und die Spuleneinheit 15 sind auf einer Innenseite der Mantelfläche des Statorjochs 13 angeordnet. Alternativ können der Permanentmagnet 14 und die Spuleneinheit 15 auf einer Außenseite der Mantelfläche des Statorjochs 13 angeordnet sein.

Der Reluktanzrotor 12 weist ein zylindrisches Rotorjoch 16 aus einem weichmagnetischen Material auf, ist frei von magnetischen Quellen, ist mit einer Drehanode der Drehanodenanordnung verbindbar und ist mittels des magnetischen Flusses um die Drehachse R antreibbar. Der Stator 11 erzeugt insbesondere durch eine Bestromung der Spuleneinheit 15 gemeinsam mit dem Permanentmagneten 14 ein um die Drehachse R rotierendes Magnetfeld, welches auf den Reluktanzrotor 12 ein Drehmoment ausübt und somit den Reluktanzrotor 12 synchron um die Drehachse R antreibt. Der Reluktanzrotor 12 ist insbesondere für einen magnetischen Rückschluss ausgebildet. Der Reluktanzrotor 12 ist beispielsweise dadurch frei von magnetischen Quellen, wenn der Reluktanzrotor 12 insbesondere keine rotorseitige Spuleneinheit und/oder keinen rotorseitigen Permanentmagneten aufweist.

Das Statorjoch 13, der Permanentmagnet 14, das Rotorjoch 16 und die Spuleneinheit 15 bilden einen derart ausgestalteten magnetischen Kreis M zur Führung des magnetischen Flusses, dass zwischen dem Permanentmagneten 14 und der Spuleneinheit 15 eine axiale Richtung des magnetischen Kreises M im Statorjoch 13 und eine axiale Richtung des magnetischen Kreises M im Rotorjoch 16 entgegengesetzte Vorzeichen aufweisen. In anderen Worten weisen typischerweise eine radiale Richtung des magnetischen Kreises M im Permanentmagneten 14 und eine radiale Richtung des magnetischen Kreises M in der Spuleneinheit 15 zwischen dem Statorjoch 13 und dem Rotorjoch 16 entgegengesetzte Vorzeichen auf. Der magnetische Fluss wird insbesondere entlang des magnetischen Kreises M durch das Statorjoch 13, den Permanentmagneten 14, das Rotorjoch 16 und die Spuleneinheit 16 hindurchgeführt. Der magnetische Kreis M ist als geschlossener Kreislauf mit Pfeilen in den Figuren schematisch angedeutet. Eine derartige Führung des magnetischen Flusses erfordert eine bestimmte Magnetisierungsrichtung des Permanentmagneten 14. Selbstverständlich kann die Magnetisierungsrichtung des Permanentmagneten 14 verändert oder ein anderer Permanentmagnet mit umgekehrter Magnetisierungsrichtung verwendet und somit auch die Richtung des magnetischen Flusses entlang des magnetischen Kreises M umgekehrt werden.

Der magnetische Kreis M weist insbesondere Pfade parallel zur Drehachse R und senkrecht zur Drehachse R auf. Die Pfade parallel zur Drehachse R entstehen insbesondere durch die Beabstandung des Permanentmagneten 14 und der Spuleneinheit 15. Der magnetische Fluss wird im Betrieb des bürstenloses Antriebssystems 10 insbesondere radial und axial geführt. Das bürstenlose Antriebssystem ist insbesondere eine kombinierte Axialfluss- und Radialflussmaschine. Eine Kommutierung des magnetischen Flusses erfolgt insbesondere durch die Reluktanzstruktur des Reluktanzrotors 12. Das Rotorjoch 16 wird insbesondere zur Übertragung des magnetischen Flusses zwischen Stator 11 und Reluktanzrotor 16 verwendet.

Der magnetische Kreis M kann insbesondere eine Parallelschaltung mehrerer magnetischer Kreise sein. Die Parallelschaltung kann sich dadurch ergeben, dass typischerweise an jedem Statorzahnpol 17 der magnetische Fluss radial geführt wird und somit die voneinander beabstandeten Statorzahnpole 17 die Aufspaltung des magnetischen Kreises M in die Parallelschaltung mehrerer magnetischer Kreise verursacht.

Die Richtung des magnetischen Kreises M ist typischerweise umkehrbar, beispielsweise durch Umkehrung der Bestromung. Grundsätzlich ist es denkbar, dass die radiale Richtung des magnetischen Kreises M innerhalb der Spuleneinheit 15 durch eine entsprechende Bestromung übertragen in ein Ersatzschaltbild parallel darstellbar ist.

In diesem Ausführungsbeispiel bilden die mehreren Spulen der Spuleneinheit 15 sechs Drehstromwicklungen, welche statorseitig zur Erzeugung des rotierenden Magnetfelds bestrombar sind und wovon vier zumindest teilweise in Fig. 1 gezeigt sind. Die Anzahl an Drehstromwicklungen kann alternativ kleiner oder größer sechs ein. Die mehreren Spulen sind typischerweise paarweise einer Phase zugeordnet.

Der Reluktanzroktor 12 ist in diesem Ausführungsbeispiel ein Innenläufer. Alternativ kann der Reluktanzrotor 12 ein Außenläufer sein.

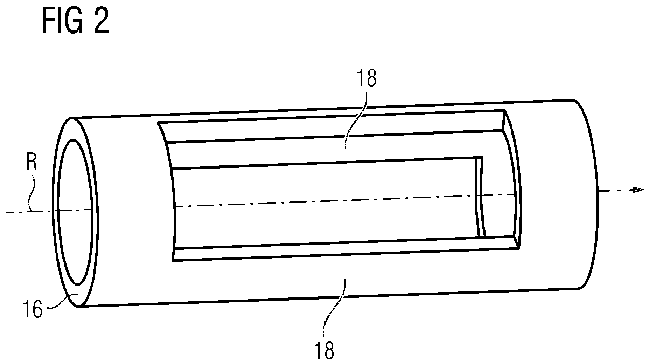

Fig. 2 zeigt das Rotorjoch 16 in einer perspektivischen Ansicht.

Das Rotorjoch 16 ist in diesem Ausführungsbeispiel zur Aufnahme eines nicht gezeigten Lagers 20 hohl ausgebildet. Alternativ kann das Rotorjoch 16 voll aufgebaut sein. Die Aufnahme des Lagers 20 kann alternativ stirnseitig am Rotorjoch 16 erfolgen. Das Rotorjoch 16 kann beispielsweise einen Flansch umfassen, an welchem das Lager 20 drehfest befestigt sein kann. Das Lager 20 kann insbesondere ein Flüssigmetallgleitlager oder ein Kugellager sein. Die Verbindung des Lagers 20 und des Rotorjochs 16 ist typischerweise drehfest und/oder lösbar.

Alternativ oder zusätzlich ist die Drehanode der Drehanodenanordnung mittels eines Flansches mit dem Rotorjoch 16 verbindbar. Die Drehanode ist insbesondere drehfest mit dem Rotorjoch 16 verbindbar und/oder am Rotorjoch 16 befestigt.

Das Rotorjoch 16 kann einstückig oder geblecht sein. Ein einstückiges Rotorjoch 16 wird regelmäßig als massives Rotorjoch bezeichnet. Das weichmagnetische Material des Rotorjochs 16 kann insbesondere ein Elektro- oder Dynamoblech oder ein SMC-Werkstoff sein. Insbesondere kann das Rotorjoch 16 aus Stahl oder einem Edelstahl bestehen.

Zur Ausprägung eines Rotorpolpaares 18 weist das Rotorjoch 16 eine Strukturierung auf. Die Strukturierung kann insbesondere durch seitliche Ausnehmungen in Drehrichtung erfolgen. In diesem Fall weist das Rotorjoch 16 die seitlichen Ausnehmungen in der zylindrischen Mantelfläche zur Ausprägung des zumindest einen Rotorpolpaares 18 auf. Die Ausnehmung ist insbesondere eine Ausschneidung. Die Rotorpolpaarzahl kann alternativ zu dem in Fig. 2 gezeigten Ausführungsbeispiel größer 1 sein.

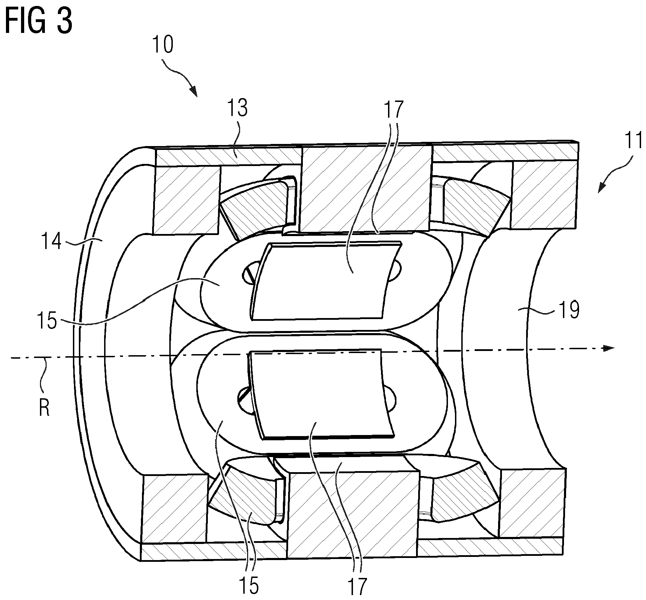

Fig. 3 zeigt in einer perspektivischen Ansicht eine Schnittdarstellung des bürstenlosen Antriebssystems 10 in einem ersten Ausführungsbeispiel. Die Schnittkante ist entlang der Drehachse R.

Der Stator 12 weist einen weiteren ringförmigen Permanentmagneten 19 auf. Die Spuleneinheit 15 ist mittig zwischen dem Permanentmagneten 14 und dem weiteren Permanentmagneten 19 angeordnet. Die Spuleneinheit 15 ist zum Permanentmagneten 14 und zum weiteren Permanentmagneten 19 axial beabstandet. Der Abstand von der Spuleneinheit 15 zum Permanentmagneten 14 bzw. zum weiteren Permanentmagneten 19 ist typischerweise äquidistant. Die Anordnung der Spuleneinheit 15, des Permanentmagneten 14 und des weiteren Permanentmagneten 19 ist insbesondere symmetrisch und/oder parallel. Die Spuleneinheit 15, der Permanentmagnet 14 und der weitere Permanentmagnet 19 sind insbesondere zylindrisch angeordnet oder ausgerichtet. Der Permanentmagnet 14 und der weitere Permanentmagnet 19 sind insbesondere baugleich und/oder identisch, insbesondere in Hinblick auf eine Magnetisierung.

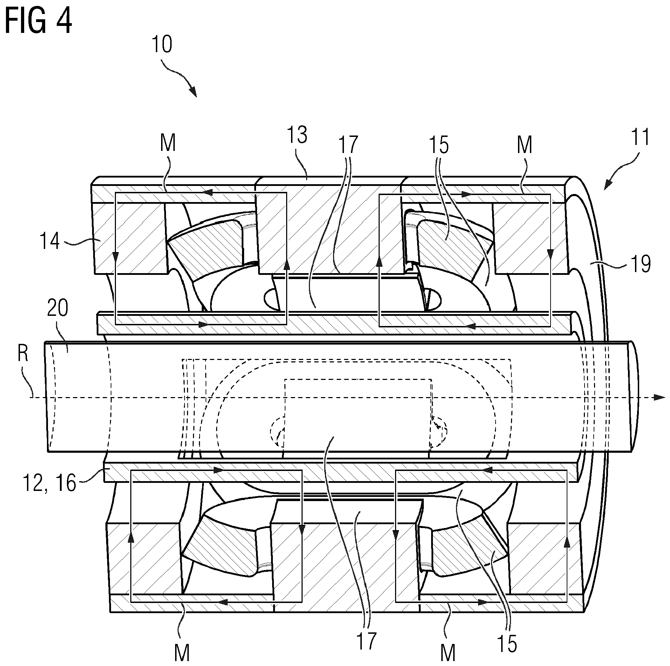

Fig. 4 zeigt das bürstenlose Antriebssystem 10 der Fig. 3 in einer weiteren Ansicht.

Zusätzlich zeigt Fig. 4 den Reluktanzrotor 12 mit dem Rotorjoch 16. Weiterhin sind in Fig. 4 die Pfade der vier hervorgehobenen magnetischen Kreise M dargestellt, welche jeweils für sich derart ausgestaltet sind, dass zwischen dem Permanentmagneten 14 bzw. dem weiteren Permanentmagneten 19 und der Spuleneinheit 15 eine axiale Richtung des magnetischen Kreises M im Statorjoch 13 und eine axiale Richtung des magnetischen Kreises M im Rotorjoch 16 entgegengesetzte Vorzeichen aufweisen. Das Rotorjoch 16 ist in diesem Ausführungsbeispiel zur Aufnahme eines Lagers 20 hohl ausgebildet und weist seitliche Ausnehmungen in der zylindrischen Mantelfläche zur Ausprägung zumindest eines Rotorpolpaares 18 auf. Das Lager 20 ist aus Gründen der Übersichtlichkeit in Fig. 4 teilweise transparent dargestellt. Regelmäßig ist ein Material und/oder eine Struktur eines solchen Lagers 20 nicht transparent oder semitransparent.

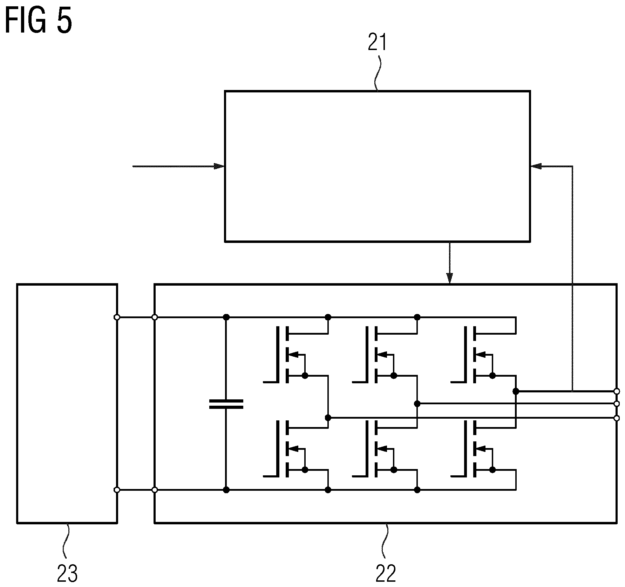

Fig. 5 ein Ersatzschaltbild einer Regelung des bürstenlosen Antriebssystems 10 in einem zweiten Ausführungsbeispiel.

Das bürstenlose Antriebssystem 10 weist eine Regeleinheit 21 und einen Wechselrichter 22 auf. Der Wechselrichter 22 weist insbesondere Transistoren zur Wandlung des Gleichstroms am Eingang in eine Wechselspannung am Ausgang auf.

Die Regeleinheit 21 ist zum Bestromen der mehreren Spulen nach Art eines bürstenlosen Gleichstrommotors ausgebildet. Grundsätzlich sind verschiedene geberlose Regelungsmethoden möglich, insbesondere ein blockförmiger Betrieb mit Nulldurchgangserkennung in der nicht bestromten Phase. Die Regeleinheit 21 ist dafür typischerweise mit dem Wechselrichter 22 zur Regelung des Wechselrichters 22 verbunden.

Die Regeleinheit 21 kann insbesondere den Wechselrichter 22, insbesondere die Transistoren, mittels Schaltsignalen schalten, um die Wechselspannung zu erzeugen. Der Wechselrichter 22 weist in diesem Ausführungsbeispiel einen dreiphasigen Ausgang auf, um die mehreren Spulen der nicht in Fig. 5 gezeigten Spuleneinheit 15 zu bestromen. Der Wechselrichter 22 ist typischerweise der Spuleneinheit 15 vorgeschaltet, um die mehreren Spulen der Spuleneinheit 15 mit Wechselspannung bestromen zu können.

Die Regeleinheit 21 kann einen Eingang aufweisen, um einen eine Statorspannung und/oder einen Statorstrom und/oder eine Statorfrequenz einer oder mehrere Phasen des Ausgangs des Wechselrichters 22 abbildenden Messwert zu empfangen. Die Regeleinheit 21 kann einen weiteren Eingang aufweisen, um einen Sollwert der Statorspannung und/oder des Statorstroms und/oder einer Statorfrequenz zu empfangen.

Vorteilhafterweise ist dem Wechselrichter 22 eine Gleichstromquelle 23 vorgeschaltet. Die Gleichstromquelle 23 stellt insbesondere eine Gleichspannung kleiner 400 V oder 230 V, beispielsweise 24 V oder 48 V, bereit. Der Wechselrichter 22 wird von der Gleichstromquelle 23 gespeist.

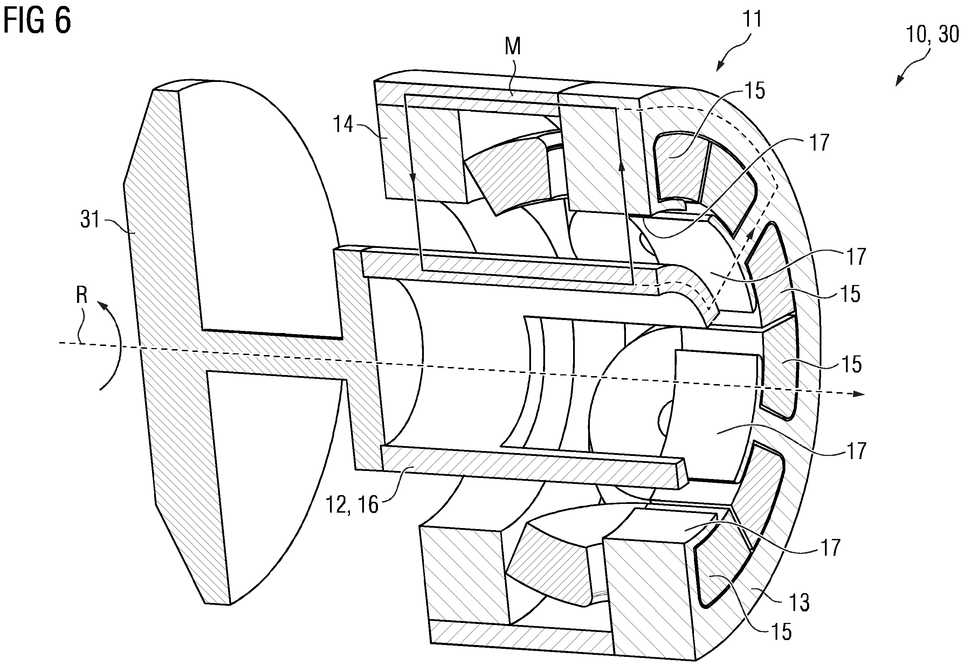

Fig. 6 zeigt eine Schnittdarstellung einer erfindungsgemäßen Drehanodenanordnung 30 in einer perspektivischen Ansicht.

Die Drehanodenanordnung 30 weist ein bürstenloses Antriebssystem 10 wie beispielsweise in Fig. 1 gezeigt und eine Drehanode 31 auf. Die Drehanode 31 ist mit dem Reluktanzrotor 16 drehfest verbunden. Die Drehanode 31 kann mit dem Reluktanzrotor 16 und/oder mit einem nicht gezeigten Lager 20 direkt gekoppelt sein. Die Drehanode 31 kann insbesondere am Reluktanzrotor 16 und/oder am nicht gezeigten Lager 20 befestigt sein.

Die dem bürstenlosen Antriebssystem 10 abgewandte Vorderseite der Drehanode 31 ist zum Generieren von Röntgenstrahlung in Abhängigkeit der in einem Brennfleck eintreffenden Elektronen ausgebildet. Bei der Drehanode 31 ist der Brennfleck insbesondere Teil einer Brennbahn, welche durch die Rotation der Drehanode 31 um die Drehachse R entstehen kann. Die Rotation der Drehanode 31 ermöglicht vorteilhafterweise eine höhere Hubtemperatur und somit einen höheren Elektronenstrom auf der Oberfläche der Vorderseite. Die Vorderseite der Drehanode weist insbesondere im Bereich des Brennflecks und/oder der Brennbahn Wolfram und/oder Molybdän auf.

Die Drehanode 31 weist einen Anodenteller auf. Der Anodenteller weist üblicherweise einen Anodenwinkel größer 0° auf. Die dem bürstenlosen Antriebssystem 10 zugewandte Rückseite der Drehanode 31 kann eine die Oberfläche vergrößernde Struktur aufweisen. Auf der Rückseite weist die Drehanode 31 beispielweise Grafit zur Entwärmung der Vorderseite auf.

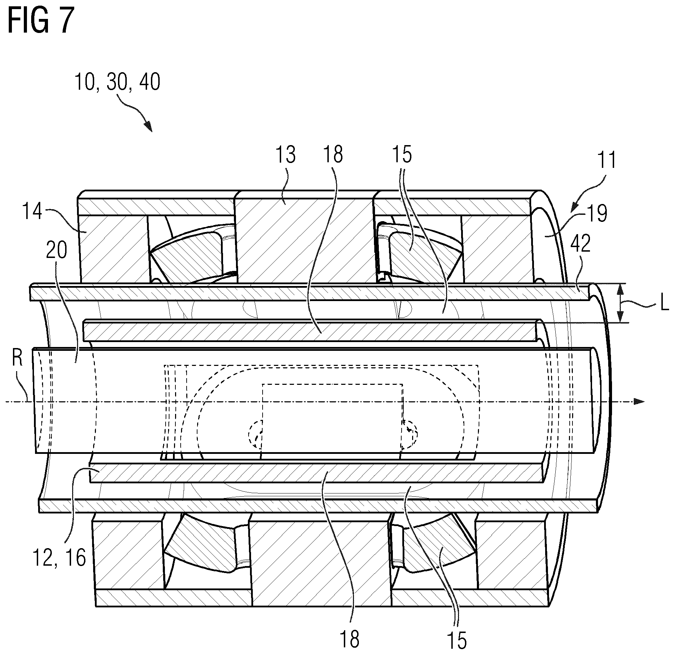

Fig. 7 zeigt eine Schnittdarstellung einer erfindungsgemäßen Röntgenröhre 40 in einer perspektivischen Ansicht.

Die Röntgenröhre 40 weist eine Drehanodenanordnung 30, einen Elektronenemitter und ein evakuiertes Röntgenröhrengehäuse 42 auf. Die Drehanode 31 ist aus Gründen der Übersichtlichkeit in Fig. 7 nicht gezeigt.

Der Reluktanzrotor 12 sowie der Elektronenemitter sind innerhalb des Röntgenröhrengehäuses 42 angeordnet. Der Stator 11 ist außerhalb des Röntgenröhrengehäuses 42 angeordnet. Das evakuierte Röntgenröhrengehäuse 42 kann Glas und/oder Metall umfassen. Insbesondere im Bereich des bürstenlosen Antriebssystems 10 weist das evakuierte Röntgenröhrengehäuse 42 vorzugsweise Glas auf, weil Metall je nach Ausgestaltung den magnetischen Fluss beeinflussen kann. Das evakuierte Röntgenröhrengehäuse 42 weist also insbesondere einen Glaskolben auf, welcher in einem Luftspalt L zwischen dem Stator 11 und dem Reluktanzrotor 12 angeordnet ist. In Fig. 7 ist im Wesentlichen der Glaskolben des Röntgenröhrengehäuses 42 in einer Schnittdarstellung dargestellt. Das evakuierte Röntgenröhrengehäuse 42 ist typischerweise von einem Kühlmedium umgegeben und umgibt den Elektronenemitter und die Drehanode 31 auch außerhalb des Glaskolbens vakuumdicht.

Die Röntgenröhre 40 ist für eine bildgebende Untersuchung eines Patienten ausgebildet. Alternativ kann die Röntgenröhre 40 für eine Werkstoffprüfung vorgesehen sein. Die bildgebende Untersuchung kann eine Angiographie, Computertomographie, Mammographie oder Radiographie sein.

Der Elektronenemitter ist zum Generieren eines Brennflecks auf der Drehanode 31 mittels Elektronen ausgebildet. Der Elektronenemitter kann einen Feldeffekt-Emitter oder einen thermionischen Emitter aufweisen. Der thermionische Emitter kann ein Wendelemitter oder Flachemitter sein.

Die Elektronenemission beim Feldeffekt-Emitter wird typischerweise durch das Anlegen einer Gatespannung erwirkt, welche durch das in den Spitzen der Nanoröhrchen auftretenden elektrischen Felds die Elektronen aus diesen Nano-röhren extrahiert, wodurch der Elektronenstrom gebildet wird. Zusätzlich zum Schalten mittels der Gatespannung kann das Sperren eines generierten Elektronenstroms mittels eines Sperrgitters erfolgen. Der Feldeffekt-Emitter weist typischerweise eine Vielzahl an Nanoröhrchen, beispielsweise aus Kohlenstoff oder Silizium oder Molybdän, auf.

Die emittierten Elektronen werden von dem Elektronenemitter in Richtung der Anode 31 beschleunigt und generieren bei der Wechselwirkung in dem Brennfleck die Röntgenstrahlung. Die generierte Röntgenstrahlung weist üblicherweise eine maximale Energie von bis zu 150 keV in Abhängigkeit von der zwischen dem Elektronenemitter und der Anode 31 angelegten Beschleunigungsspannung auf.

Obwohl die Erfindung im Detail durch die bevorzugten Ausführungsbeispiele näher illustriert und beschrieben wurde, so ist die Erfindung dennoch nicht durch die offenbarten Beispiele eingeschränkt und andere Variationen können vom Fachmann hieraus abgeleitet werden, ohne den Schutzumfang der Erfindung zu verlassen.

## Patentansprüche

1. Bürstenloses Antriebssystem (10) für eine Drehanodenanordnung (30), aufweisend
- einen Stator (11) zur Erzeugung eines magnetischen Flusses und
- einen Reluktanzrotor (12),
wobei der Stator (11) ein zylindrisches Statorjoch (13), einen ringförmigen Permanentmagneten (14) und eine Spuleneinheit (15) aufweist,
wobei der Reluktanzrotor (12) ein zylindrisches Rotorjoch (16) aus einem weichmagnetischen Material aufweist, frei von magnetischen Quellen ist, mit einer Drehanode (31) der Drehanodenanordnung (30) verbindbar ist und mittels des magnetischen Flusses um eine Drehachse (R) antreibbar ist,
**dadurch gekennzeichnet,**
**dass** der Permanentmagnet (14) und die Spuleneinheit (15) axial entlang der Drehachse (R) beabstandet sind und dass das Statorjoch (13), der Permanentmagnet (14), das Rotorjoch (16) und die Spuleneinheit (15) einen derart ausgestalteten magnetischen Kreis (M) zur Führung des magnetischen Flusses bilden, dass zwischen dem Permanentmagneten (14) und der Spuleneinheit (15) eine axiale Richtung des magnetischen Kreises (M) im Statorjoch (13) und eine axiale Richtung des magnetischen Kreises (M) im Rotorjoch (16) entgegengesetzte Vorzeichen aufweisen.

2. Bürstenloses Antriebssystem (10) nach Anspruch 1,
wobei der Stator (11) einen weiteren ringförmigen Permanentmagneten (19) aufweist, wobei die Spuleneinheit (15) mittig zwischen dem Permanentmagneten (14) und dem weiteren Permanentmagneten (19) angeordnet ist und zum Permanentmagneten (14) sowie zum weiteren Permanentmagneten (19) axial beabstandet ist.

3. Bürstenloses Antriebssystem (10) nach einem der vorhergehenden Ansprüche,
wobei das Rotorjoch (16) zur Aufnahme eines Lagers (20) hohl ausgebildet ist.

4. Bürstenloses Antriebssystem (10) nach einem der vorhergehenden Ansprüche,
wobei das Rotorjoch (16) stirnseitig zur Aufnahme eines Lagers (20) ausgebildet ist.

5. Bürstenloses Antriebssystem (10) nach einem der vorhergehenden Ansprüche,
wobei die Spuleneinheit (15) mehrere entlang des Umfangs des Statorjochs (13) um Statorzahnpole (17) des Statorjochs (13) gewickelte Spulen aufweist.

6. Bürstenloses Antriebssystem (10) nach einem der vorhergehenden Ansprüche,
wobei die mehreren Spulen der Spuleneinheit (15) eine dreisträngige Motorwicklung bilden.

7. Bürstenloses Antriebssystem (10) nach einem der vorhergehenden Ansprüche,
wobei das Rotorjoch (16) seitliche Ausnehmungen in der zylindrischen Mantelfläche zur Ausprägung zumindest eines Rotorpolpaares (18) aufweist.

8. Bürstenloses Antriebssystem (10) nach einem der vorhergehenden Ansprüche,
wobei das bürstenlose Antriebssystem (10) eine Regeleinheit (21) zum Bestromen der mehreren Spulen der Spuleneinheit (15) nach Art eines bürstenlosen Gleichstrommotors aufweist.

9. Bürstenloses Antriebssystem (10) nach einem der vorhergehenden Ansprüche,
wobei das bürstenlose Antriebssystem (10) einen Wechselrichter (22) aufweist, welcher der Spuleneinheit (15) vorgeschaltet ist zum Bestromen der mehreren Spulen der Spuleneinheit (15) mit Wechselspannung.

10. Bürstenloses Antriebssystem (10) nach einem der vorhergehenden Ansprüche,
wobei das Rotorjoch (16) einstückig ausgebildet ist.

11. Bürstenloses Antriebssystem (10) nach einem der vorhergehenden Ansprüche,
wobei der Reluktanzrotor (12) ein Innenläufer ist.

12. Bürstenloses Antriebssystem (10) nach Anspruch 11,
wobei der Permanentmagnet (14) und die Spuleneinheit (15) auf einer Innenseite der Mantelfläche des Statorjochs (13) angeordnet sind.

13. Bürstenloses Antriebssystem (10) nach einem der vorhergehenden Ansprüche,
wobei die mehreren Spulen der Spuleneinheit (15) zumindest zwei, vorzugsweise sechs Drehstromwicklungen bilden.

14. Drehanodenanordnung (30), aufweisend
- ein bürstenloses Antriebssystem (10) nach einem der vorhergehenden Ansprüche und
- eine Drehanode (31), wobei die Drehanode (31) mit dem Reluktanzrotor (16) drehfest verbunden ist.

15. Röntgenröhre (40), aufweisend
- eine Drehanodenanordnung (30) nach Anspruch 14,
- einen Elektronenemitter und
- ein evakuiertes Röntgenröhrengehäuse (42), wobei der Reluktanzrotor (12) sowie der Elektronenemitter innerhalb des Röntgenröhrengehäuses (42) und der Stator (11) außerhalb der Röntgenröhrengehäuses (42) angeordnet sind.
